# EUROPEAN PATENT APPLICATION

(11) **EP 4 201 564 A1**
(43) Date of publication of application: **28.06.2023**
(21) Application number: 21217363.7
(22) Date of filing: 23.12.2021
(51) Int. Cl.: B23C 5/10

(54) **END MILL**

(71) Applicant: Walter AG, 72072 Tübingen (DE)
(72) Inventor: Marx, Martin, 720 72 Tübingen (DE)
(74) Representative: Sandvik

(57) **Abstract**

The present invention relates to an end mill for metal cutting comprising a body (1), which body (1) comprises a cutting section (6) extending axially rearward from a front end (2), which cutting section (6) comprises a plurality of radially protruding and axially extending teeth (7). Each tooth (79 of the plurality of teeth (7) comprises a front cutting edge (13), which front cutting edge (13) extends axially rearward and radially outward from an axially most forward point (14, 14a) of the respective cutting edge (12). When the body (1) is rotated, the cutting edge (12) of each tooth (7) forms a line of intersection in a central plane containing the central longitudinal axis (4). Each front cutting edge (13) is interrupted by at least two chip splitting grooves (17) such that the line of intersection of the front cutting edge (13) with the interrupting chip splitting grooves (17) comprises outer crests (22), which each is located on an imaginary convex curve (24); at least two inner troughs (23); and curve parts (25), which each extend from one respective trough (23) of the at least two troughs (23) to one of the respective two axially closest crests (22). Each curve part (25) comprises a convexly curved outer portion (26), which extends inward from the crest (22), and has a radius (27) of curvature that, in all positions, is larger than 0,1 mm.

## Description

### Technical field

The present invention relates to an end mill for metal cutting.

### Background

A wide range of components are machined from many different types of material, such as metal, composites or combinations thereof. Accordingly, a variety of different cutting tools, and in particular milling tools such as end mills, have been developed. Conventionally, an end mill comprises a plurality of cutting edges, which extend axially along the tool. Some end mills, such as for example ball nose end mills, have cutting edges that start at a radially inner position at the front end and extend radially outward and axially rearward therefrom. Such cutting edges typically comprise a mainly forwardly cutting portion at the front end and a mainly radially cutting portion along an axial section of the tool. Thus, the cutting edge comprises a curved portion at the front end and/or in a transition between the forwardly cutting front portion and the radially cutting portion.

A problem with such known end mills is that, for some applications, chip cut by the curved portion of the cutting edge are difficult to evacuate and may get stuck between the tool and a workpiece that is being machined, which may cause tool vibrations and/or damage to the workpiece and/ or the end mill.

### Summary

An object of the present invention is to at least partly obviate the above mentioned problems. This object is achieved according to the invention by means of an end mill according to claim 1.

The present invention relates to an end mill comprising a body, which body comprises
- a front end, a rear end, and a central longitudinal axis extending from the front end to the rear end, wherein the body is configured rotatable in a direction of rotation around the central longitudinal axis, and
- a cutting section extending axially rearward from the front end, which cutting section comprises a plurality of radially protruding and axially extending teeth,
   wherein
- each tooth of the plurality of teeth comprises a rake surface, a clearance surface, and a cutting edge at an intersection of the rake surface with the clearance surface,
- each cutting edge of the plurality teeth comprise a front cutting edge, which front cutting edge extends axially rearward and radially outward from an axially most forward point of the respective cutting edge, and,
- when the body is rotated, the cutting edge of each tooth forms a line of intersection in a central plane containing the central longitudinal axis,
   wherein
   each front cutting edge is interrupted by at least two chip splitting grooves such that the line of intersection of the front cutting edge with the interrupting chip splitting grooves comprises
- at least three outer crests, which each is located on an imaginary curve, wherein the imaginary curve extends in the central plane and is convex,
- at least two inner troughs, which each is located between respective two axially closest crests of the at least three crests, and
- curve parts, which each extend from one respective trough of the at least two troughs to one of the respective two axially closest crests,
   wherein each curve part comprises a convexly curved outer portion, which
- extends inward from the crest, and
- has a radius of curvature that, in all positions, is larger than 0,1 mm.

Thus, the subject end mill comprises front cutting edges that each have a shape that is defined by an image thereof in a central longitudinal plane containing the central longitudinal axis. The image of the respective cutting edge is obtained by rotating the end mill around the central longitudinal axis so that the cutting edge forms a line of intersection in the central plane. In this image, radially outer peaks of the front cutting edge are visible as crests of the line of intersection, and bottoms of the chip splitting grooves are visible as troughs of the line of intersection. An imaginary curve connects the crests of the line of intersection. A curvature of the imaginary curve is representative of a curvature of the front cutting edge. A portion of the cutting edge that extends from an outer peak to the bottom of the chip splitting groove is, in the image visible as the curve part extending from a crest to a trough in the line of intersection.

According to the subject end mill, each curve part of the line of intersection has a radius of curvature that, in all positions of the curve part, is larger than 0,1 mm. This is representative of a cutting edge with chip splitting grooves that lacks sharp corners, which may disadvantageously affect the strength. Strength is especially important for curved front cutting edges of end mills due to more difficult cutting conditions at a curved front cutting edge than for example along an axially extending cutting edge. This is due to for example varying speed and cutting forces at radially inner and radially outer positions of a radially extending curved front cutting edge. Thanks to the herein described specific design of the chip splitting grooves, the front cutting edge with a curvature as represented by the imaginary curve can be provided with chip splitting grooves even though strength is especially important for a curved front cutting edge. Thus, an improved end mill is obtainable which has better chip evacuation properties and a strong front cutting edge, which in turn ensures less vibrations during operation.

The subject end mill has a body, which comprises a front end, a rear end and a central longitudinal axis extending from the front end to the rear end. Preferably, the body is elongated in the longitudinal direction of the central longitudinal axis. The body is configured rotatable in a direction of rotation around the central longitudinal axis. The center of the body is at the central longitudinal axis.

The body of the end mill has a cutting section at the front end. Preferably, the cutting section is an axial length portion of the body, which portion is a forward most portion of the body. According to an embodiment, the body comprises further sections, such as a coupling section at a rear end for providing a mounting interface. Optionally, the mounting interface is designed to be coupled to a rotatable machine spindle or to an adapter for a rotatable machine spindle. Preferably, the coupling section is a rod wherein the rod and the cutting section both are comprised in a one-piece integral component in form of the body.

The cutting section comprises a plurality of radially protruding teeth. Each tooth of the plurality of teeth comprises a rake surface, a clearance surface and a cutting edge at an intersection of the rake surface with the clearance surface. Each tooth extends radially and axially along the body, wherein the cutting edge follows the extension of the respective tooth.

According to an embodiment, the cutting section comprises axially extending chip flutes arranged in a peripheral, radially outward facing surface of the cutting section of the body. Each of the plurality of teeth is associated with one respective chip flute, wherein preferably each tooth and chip flute extend alongside each other. Optionally, the chip flutes/teeth are arranged parallel with the central longitudinal axis, inclined with respect to the central axis of rotation, or along a curve, for example a helix. A chip flute that is parallel with central longitudinal axis, also referred to as an axially straight chip flute, is advantageous for breaking up chips into smaller pieces. An inclined or helical chip flute is advantageous for transporting chips rearward along the tool and for obtaining a more easy-cutting tool.

The clearance surface extends rotationally rearward from the respective cutting edge. In an embodiment with chip flutes, the body of the end mill comprises an envelope surface that extends between a rotationally leading cutting edge and a closest rotationally behind following chip flute, wherein the clearance surface is a rotationally leading portion of the envelop surface. The rake surface is a radially outer portion of the chip flute that is closest rotationally in front of the cutting edge in question.

The cutting edge of each tooth extends along the extension of the respective tooth. Each cutting edge comprises a front cutting edge, which extends from a most forward point. Optionally, the most forward point of the front cutting edge is at, i.e. in or close to, the central longitudinal axis.

According to an embodiment, two of the front cutting edges comprise a center cutting edge, for example a chisel edge, which extends across the central longitudinal axis and, at the central longitudinal axis connects these two front cutting edges with each other. Other front cutting edges of this or other embodiments optionally have their most forward point radially outward from the central longitudinal axis, wherein there is a non-cutting recess between the most forward point and the central longitudinal axis. Such design is advantageous because only a few of the front cutting edges have an edge at the center, which is more vulnerable due to high cutting forces caused by slow cutting speed at the center.

Preferably, the subject end mill is suitable for cutting a metal workpiece. Preferably, the end mill is designed with a maximal cutting diameter at the front cutting edges of 1 - 32 mm.

The front cutting edge of each tooth is interrupted by at least two chip splitting grooves. It has been found out that ranges of number of chip splitting grooves of 2 - 8, more preferably by 3 - 6 and most preferably 4- 5 are suitable for preferred diameters of end mills. For some applications, more grooves may be detrimental to the strength of the respective front cutting edge and sometimes leave an uneven surface. A front cutting edge having fewer grooves may, in some applications, not be able to cut with sufficiently small chip for proper chip evacuation.

According to an embodiment, each of the at least one front cutting edges has an axially forwardly cutting front portion, which front portion extends from the axially most forward point in form of a point at the central longitudinal axis, in any position along the length thereof forms an angle with the central longitudinal axis of at least 75°, and lacks all the at least two chip splitting grooves. Thanks to that the axially forwardly cutting front portion lacks chip splitting grooves, the strength of the front cutting edge is increased where it is subjected to high cutting forces cause by slow rotational speed at the center.

According to an embodiment, the chip splitting grooves extend rotationally rearward from the front cutting edge in the clearance surface. Optionally, the chip splitting grooves extend rotationally rearwards a portion of the clearance surface, or the entire clearance surface and end in a following chip flute.

Preferably, at least one front cutting edge has at least one chip splitting groove in a different axial position than a corresponding chip splitting groove of another front cutting edge. According to an embodiment, at least two of the front cutting edges have their respective chip splitting grooves in different axial positions. Preferably, the chip splitting grooves of the front cutting edges of the plurality of cutting edges are arranged staggered relative each other. Preferably, the chip splitting grooves of a first front cutting edge are arranged such that, radially outer peaks of other front cutting edges are located in the same axial position as the chip splitting grooves in order for the end mill to cut along the entire extension of the cutting section as the tool rotates. Preferably, the outer peaks of each front cutting edge have a curvature and axial extension to provide an overlap with chip splitting grooves of front cutting edges, wherein the design may be optimized from a desired surface finish.

In the present application, a line is a long, narrow graphic element, which optionally is straight and/or curved. The curvature of a line can in each point of the line be measured as a radius of curvature in the respective point. "Convex" and "concave" is viewed in a direction outward from a center of the body, for example radially outward or axially forward.

"Outward", "outer", "inward" "inner" or like terms are viewed in relation to a center of the body, for example a core region of the body. Radially outward, in the tool or in the central plane, is seen in relation the central longitudinal axis. An axial direction is a direction of the central longitudinal axis.

At least the front cutting edge of the each cutting edge has an extension both radially and axially so that the front cutting edge has an overall curvature, which is defined by the imaginary curve. Preferably, the front cutting edge is mainly cutting in an axially forward direction at the axially most forward point, and mainly cutting in a radial direction further axially rearward.

Optionally, the front cutting edges are designed with curvatures in other directions, such as for example a curvature circumferentially around the body at constant radial distance. For example, in embodiments with helical teeth and chip flutes, the associated front cutting edges have, in addition to their overall curvature represented by the curvature of the imaginary curve, also a helical curvature in the circumferential direction. However, the helical curvature in the circumferential direction is not visible in the image in the central plane.

According to an embodiment, the imaginary curve is a circle arc. Preferably the circle arc has a radius of curvature of 0,5 - 16 mm, more preferably 2 -12,5 mm and most preferably 5 -12,5 mm. In some applications, chip evacuation is especially challenging for cutting edges with a curvature as defined by a circle arc of the imaginary curve. Smaller radius of curvature represent front cutting edges that often inherently form narrow chips and larger curvatures represent front cutting edges where chip evacuation and strength is less problematic.

According to an embodiment, the body comprises a ball nose front end, wherein each of the front cutting edges is located on the ball nose front end. In end mills that constitute ball nose end mills, the front cutting edges produce imaginary curves in the central plane with circular arcs, chip evacuation and strength at the front cutting edges are especially problematic. Therefore, the subject front cutting edge is especially advantageous in ball nose end mills.

Preferably, the ball nose end of the ball nose end mill has a ball radius, which in the central plane containing the central longitudinal axis, forms an angle with the central longitudinal axis in each position of the imaginary curve. According to an embodiment, the forwardly cutting front portion of the front cutting edge lacks chip splitting grooves at angles from 0 - 15°. In an embodiment wherein at least one of front cutting edges that has the forward most point at a distance from the central longitudinal axis and where there is a non-cutting recess between the most forward point and the central longitudinal axis, preferably, the forwardly cutting front portion of another front cutting edge extends the same length as the non-cutting recess.

According to an embodiment, at least one of the cutting edges comprises a rear cutting edge extending axially rearward from an axially rear end of the front cutting edge, wherein at least radially outer portions of the line of intersection of the at least one rear cutting edge are located on an imaginary straight line. In an example embodiment in form of the ball nose end mill, each cutting edge comprises the front cutting edge located on the ball, and a rear cutting edge, which extends along the shaft portion of the cutting section. The shaft portion of the cutting section is for example cylindrical or conical such that the line of intersection of each rear cutting edge is a straight line in parallel with the central axis of rotation, or a straight line that is diverging towards or converging from the central axis of rotation in a direction axially rearward. Preferably, each rear cutting edge is mainly cutting in a radial direction.

Optionally, at least one of the rear cutting edges is provided with chip splitting grooves similar to the associated front cutting edge.

In the central plane, the front cutting edge is represented by a line of intersection, wherein the line comprises crests, troughs, curved portions and optionally straight portions. Preferably, the crests are located radially outward and the troughs radially inward. The curved portion comprises the curve parts, which each comprise the convexly curved outer portion preferably extending radially inward from the crest. Preferably each convexly curved outer portion has curvature, which has a minimum along the length of the respective curved outer portion, wherein the curvature at the minimum is smaller than 0,3 mm. Thus, preferably, the curvature at the minimum is smaller than 0.3 mm and larger than 0,1 mm. Thereby advantageously at the same time a sufficiently strong radially outer corner of the chip splitting groove and a sufficiently articulated chip breaking interruption of the cutting is achieved.

According to an embodiment, the convexly curved outer portions of the curve parts, at a radially inner end, each connects to a concavely curved radially inner portion. Each concavely curved inner portion extends radially inward therefrom to a respective one of the troughs. In the trough, each concavely curved inner portion meets another concavely curved inner portion of an axially closest convexly curved inner portion.

According to an embodiment, two axially closest convexly curved outer portions meet at axially central crests of the at least three crests. Alternatively, the line of intersection comprises a crest in form of straight portion that connects on either side to two axially closest convexly curved outer portions.

The image of each such front cutting edges constitute, in the central plane, a wave-shaped line of intersection.

Preferably, the end mill is configured for a maximal feed per tooth, wherein, for each of the front cutting edges, the inward extension of each curve part is at least the maximal feed per tooth. Preferably, the maximal inward extension is at least 0,1 mm. Thereby it is ensured that the chip splitting groove is sufficiently deep for the cutting edge to produced split chips.

Preferably, the bottom of the chip splitting grooves are non-cutting, so that each of the front cutting edges comprises cutting, radially outer peaks, and non-cutting, radially inner bottoms.

The line of intersection comprises at least one arc length, which extends from a first to a second of the respective two axially closest crests, i.e. a period arc length. In embodiments with more than two chip splitting groves, the line of intersection comprises several period arc lengths. Optionally all period arc lengths are the same, or differ along the axial extension of one or all of the front cutting edges. In embodiments where the line of intersection is wave-shaped, the arc length corresponds to a period of the wave.

According to an embodiment, an inward extension, for example a radially inward extension, of each curve part is at most 20% of a period arc length of the imaginary curve. It has been found that thereby a suitable relation between, on one hand, the distance between two axially closest troughs, and on the other hand, sufficient depths for achieving chip splitting in desired applications. Preferably, the inward extension, for example a radially inward extension, of each curve part is at most 10% of the period arc length of the imaginary curve. This is suitable for creating even surfaces in embodiments of finishing ball nose end mills.

The clearance surface of each tooth has a first clearance angle closest to the cutting edge. Rotationally behind thereof, the clearance surface may have a second or further clearance angles. For measuring the clearance angle in a point of the clearance surface, which clearance surface follows one of the front cutting edges, the central plane containing the line of intersection and the imaginary curve is viewed. The imaginary curve has a radius that passes through the line of intersection in a point that corresponds to the position of the point in the clearance surface. A tangent of the imaginary curve on this radius is normal to a plane for measuring the clearance angle in the corresponding point of the clearance surface in the end mill.

Preferably, in any axial position along the axial extension of each of the front cutting edges, all clearance surfaces have the same first clearance angle. In other words, the clearance angle of a clearance surface behind a first cutting edge in a first axial position is the same for all other clearance surfaces following the respective other front cutting edges. A front cutting edges that has a chip splitting groove in the first axial position has the same clearance angle in the chip spitting groove as a front cutting edge having a peak. Thereby, the desired clearance angle is present in both chip splitting grooves and create portions, which enables a more predictable cutting performance of the end mill. Thereby the stability can be increased.

Preferably, the first clearance angle is at least 0,5° and at most 5°. Thereby, a strong front cutting edge is achieved together with god support to avoid vibrations. Furthermore, there is enough clearance to avoid that the end mill gets stuck. According to an embodiment, the clearance surface of each tooth comprises a reinforcement bevel closest to the cutting edge, which preferably has a first clearance angle within the preferred range. Preferably, embodiments with small first clearance angles or reinforcement bevels have a second clearance surface rotationally behind. A second clearance angle of the second clearance surface is preferably at least 6° and at most 14°

Optionally, from an axially most forward point of each of the front cutting edges and axially rearward along the axial extension thereof, the first clearance angle is constant, increases continuously or decreases continuously. Thus, the cutting properties of the front cutting edges of the end mill can be optimized with different cutting properties along their axial extension.

### Brief description of the drawings

In the following, example embodiments will be described in greater detail and with reference to the accompanying drawings, in which:
Fig. 1 is a side view of a first embodiment of the subject end mill in form of a ball nose end mill for finishing;
Fig. 2 is an enlarged view of the view of Fig. 1 showing a cutting section;
Fig. 3 is an enlarged view of the view of Fig. 2;
Fig. 4 is a view of a plane for measuring a clearance angle of a clearance surface of the embodiment of Fig. 1;
Fig. 5 is a perspective view showing a front end of the embodiment of Fig. 1;
Fig. 6 is a front end view of the embodiment of Fig. 1;
Fig. 7 is a graphical representation of front cutting edges of the embodiment of Fig. 1;
Fig. 8 is an enlarged view the graphical representation of one of the front cutting edges according to Fig. 7;
Fig. 9 is a side view of a second embodiment of the subject end mill in form of a ball nose end mill for roughing;
Fig. 10 is a graphical representation corresponding to Fig. 7 for the second embodiment of Fig. 9.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

### Detailed description

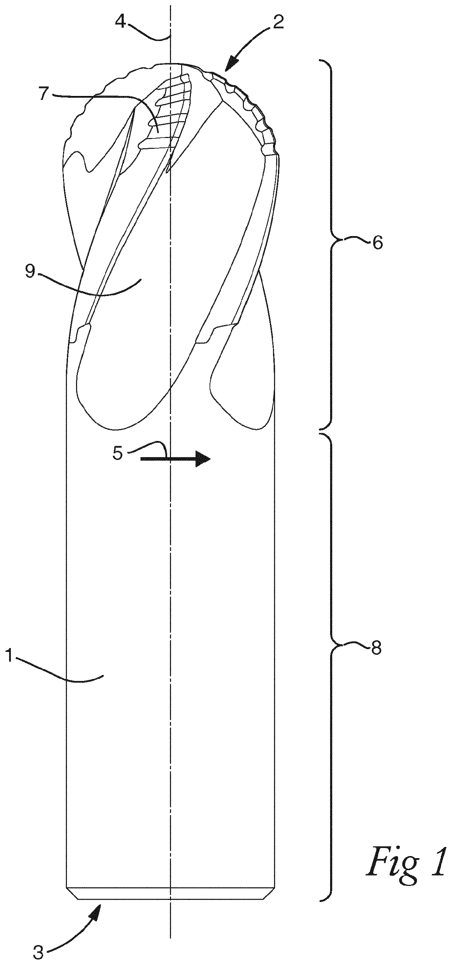

With reference to Figs. 1 - 8, a first embodiment of the subject end mill in form of a ball nose end mill for finishing is shown. The end mill comprises a body 1, having a front end 2, a rear end 3 and a central longitudinal axis 4. The end mill is configured rotatable around the central axis longitudinal axis 4 in a direction of rotation 5. A cutting section 6 extends axially rearward from the front end 2. A coupling section 8 extends axially rearward from a rear end of the cutting section 6 to the rear end 3 of the body 1. The coupling section 8 is configured to be mountable in a machine spindle. The cutting section 6 comprises a front end in from of a semispherical ball nose having a radius of 7,8 mm.

The cutting section 6 comprises a plurality of four radially protruding and axially extending teeth 7. The cutting section 6 comprises axially extending chip flutes 9, which are recessed in a peripheral, radially outward facing surface of the cutting section 6. Each tooth 7 is associated with one respective chip flute 9, wherein each tooth 7 and chip flute 9 extend helically alongside each other. The helix angle is 30°.

Each tooth 7 comprises a clearance surface 10 and a rake surface 11, and a cutting edge 12 at an intersection of the clearance surface 10 with the rake surface 11. The clearance surface 10 extends rotationally rearward from the respective cutting edge 12 to the rotationally trailing, next chip flute 9.

Each cutting edge 12 comprises a front cutting edge 13, which extends axially rearward and radially outward from an axially most forward point 14, 14a. Each front cutting edge 13 follows a respective helix line radially outward and axially rearward along the semispherical shape of the ball nose. Two of the front cutting edges 13 comprise a front portion in form of a portion of center edge 16. At the center, the center edge 16 extends across the central longitudinal axis 4, wherein corresponding two front cutting edge 13 have their most forward point 14 at the center and extend in opposite direction therefrom. The other two of the four front cutting edges 13 have their most forward point 14a a distance radially outward from the central longitudinal axis 4. In front of the point 14a of these front cutting edge 13, the end mill has a non-cutting recess 15. The maximal cutting diameter of the front cutting edges 13 is 15,6 mm (the diameter of the ball nose end).

The center cutting edge16 has, in any position along the length thereof, an angle α with the central longitudinal axis 4 of at least 75°. In the example embodiment, the center cutting edge 16 extends over an angular arc of angle β of 10°.

Each front cutting edge 13 is interrupted by at least two chip splitting grooves 17, in the example embodiment four chip splitting grooves 17. The two front cutting edges 13 that have their most forward points 14 at the center have an additional chip splitting groovem17. The center cutting edge 16 lacks chip splitting grooves 17. The chip splitting grooves 17 extend rotationally rearward from each front cutting edge 13 in the clearance surface.

Each front cutting edge 13 and the clearance surface 10 extending therefrom, has radially outer peaks 20 between two axially closest chip splitting grooves 17, and bottoms 21 in each respective chip splitting groove 17.

All four of the front cutting edges 13 have their respective chip splitting grooves 17 in different axial positions.

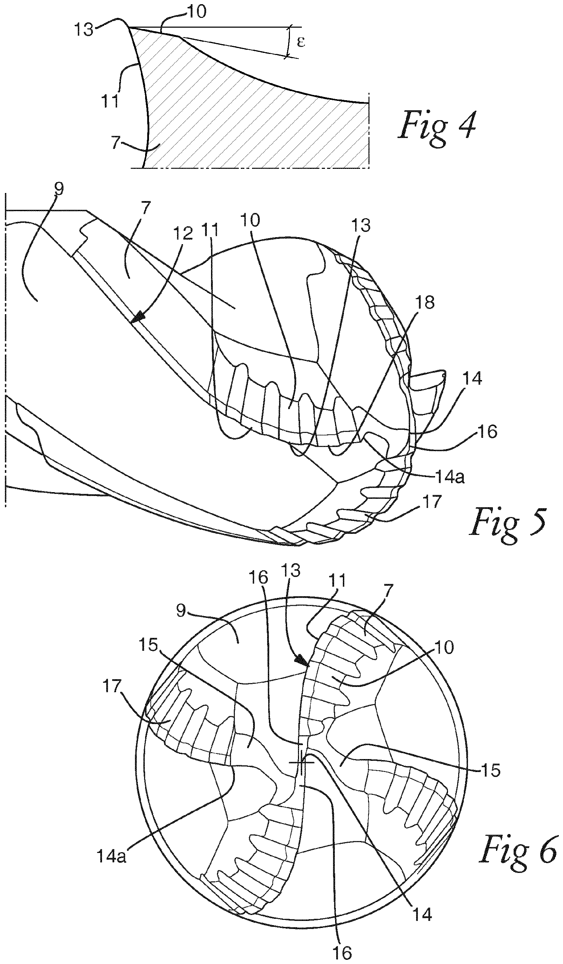

In each position along each cutting edge 12, the clearance surface 10 comprises a first portion 18 closest to the cutting edge 12. The clearance surface 10 at the first portion 18 has a first clearance angle ε closest to the cutting edge 12, c.f. Fig. 4. In the example embodiment, the first clearance angle ε varies continuously along the front cutting edge 13, wherein the first clearance angle ε is 8° at the central longitudinal axis 4 and 12° at an axially rear end of the semispherical ball nose end. At the axial rear end of the semispherical ball nose end, the radius of the ball nose end forms an angle of 90° with the central longitudinal axis. Rotationally rearward of the first portion 18 of the clearance surface 10, the clearance surface 10 has an increasing clearance angle ε.

In any axial position along the axial extension of the ball nose end of the end mill, each of the front cutting edges 13, have the same first clearance angle ε.

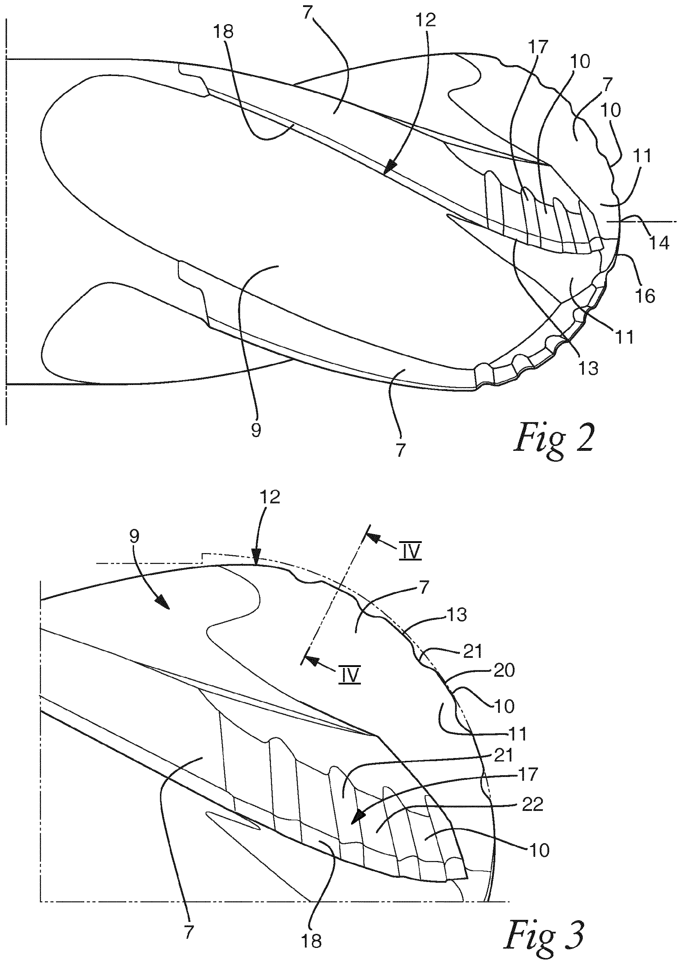

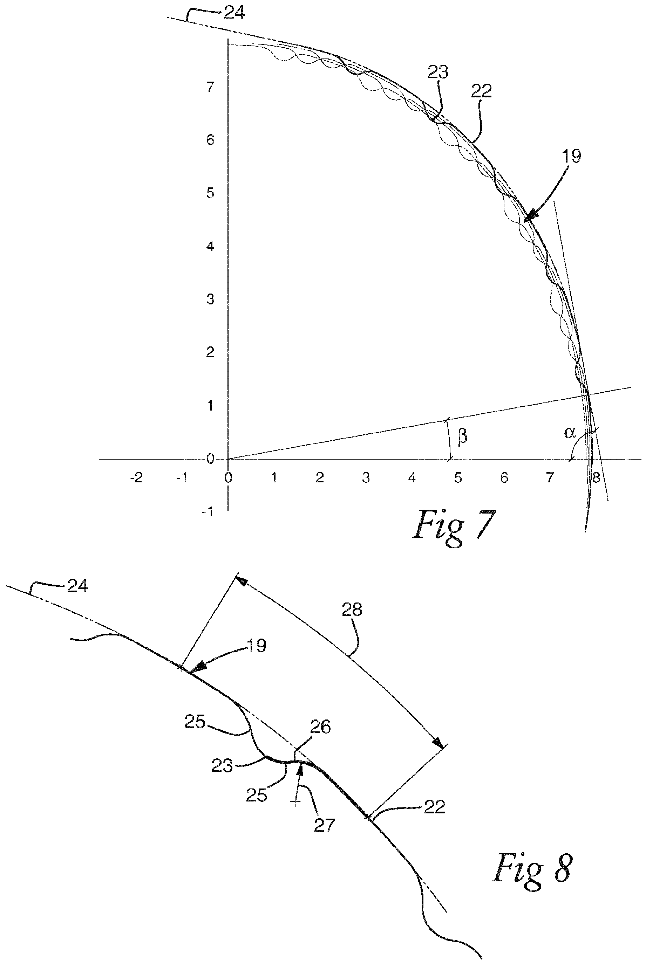

The front cutting edges 13 of the cutting edges 12 of the example end mill are graphically represented in Figs. 7 and 8. The image, or graphic representation, of the respective cutting edge 12 is obtained by rotating the end mill around the central longitudinal axis 4 so that each front cutting edge 13 forms a line 19 of intersection in the central plane. In this view, radially outer peaks 20 (c.f. Fig. 3) of the front cutting edge 13 are visible as crests 22 of the line 19 of intersection, and bottoms 21 (c.f. Fig. 3) of the chip splitting grooves are visible as troughs 23 of the line 19 of intersection. Curve parts 25 each extend from one respective trough 23 to one respective crests 22. Each curve part 25 comprises a convexly curved outer portion 26, which extends inward from one respective crest 22 and has a radius 27 of curvature that, in all positions, is larger than 0,1 mm. In the example ball nose end mill, the radius 27 of curvature is 0,2 mm.

An imaginary curve 24 connects the crests 22 of the line 19 of intersection. The imaginary curve 24 is convex radially outward. The radius of curvature of the imaginary curve 24 corresponds in the example embodiment to the radius of the ball nose end, i.e. 7,8 mm.

The crests 22, troughs 23 and curve parts 25 create a wave shaped line 19 of intersection. The arc length between two axially closest crests 22 constitute a period arc length 28. All period arc lengths 28 of each front cutting edge 13 have the same length. The inward extension of each curve part 25, i.e. a radial distance from the respective crest 22 to a respective groove 23, is at most 10% of the period arc length 28 and in the example embodiment 0,2 mm.

All four of the front cutting edges 13 have their respective chip splitting grooves 17 in different axial positions, why they are visible as four lines of intersection in the view of Fig. 7. As can be seen, the crests 22 and troughs of the respective lines 19 of intersection are in different axial positions. This is representative of the front cutting edges 13 having peaks 22 overlapping bottoms 21 so that a desired surface finish of a workpiece to be cut can be obtained. Thus, when looking at all four front cutting edges 13 at the same axial position, all four front cutting edges 13 have different points of one respective curve part 25 in that axial position. Furthermore, as stated above, they all have the same first clearance angle ε in the same axial position.

As can be seen in Fig. 3, the first clearance angle ε at a selected position along the front cutting edge 13, is measured in a plane of Fig. 4. The selected position of the front cutting edge 13 is viewed in the central plane containing the line 19 of intersection and the imaginary curve 24. A tangent of the imaginary curve 24 in the selected position is normal to the plane of Fig. 4. When measuring the clearance angle ε at the center 4, the relevant plane is a longitudinal plane, and when measuring the clearance angle ε at the axial rear end of the ball nose, the relevant plane is an axial plane.

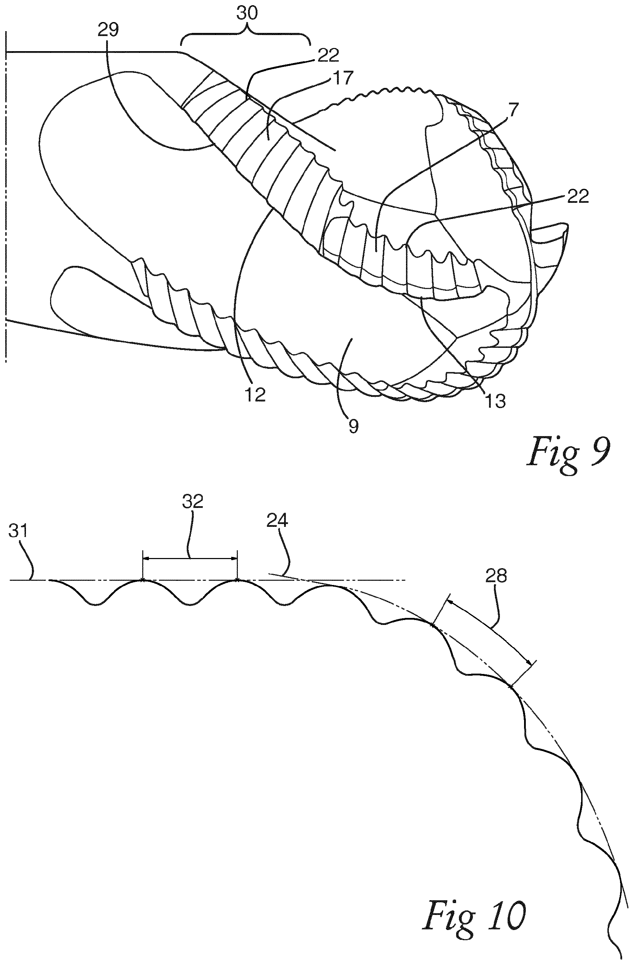

In Fig. 9, a second embodiment of the subject end mill in form of a ball nose end mill for roughing is shown, which differs from the first embodiment in that the cutting section 6 comprises a shaft portion 30 and in the shape of the cutting edges 12.

The cutting edges 12 each comprise a rear cutting edge 29. The rear cutting edges 29 each extend axially rearward from one respective front cutting edge 13 and helically along the shaft portion 30. Each rear cutting edge 29 is interrupted by chip splitting grooves 17 similar to the front cutting edges 13. Therein, each rear cutting edge 29 comprises at least two chip splitting grooves 17 such that the line 19 of intersection of the rear cutting edge 29 comprises at least three radially outer crests 22, which each is located on the imaginary straight line 31; at least two radially inner troughs 23, which each is located between respective two axially closest crests 22 of the at least three crests 22; and curve parts 25, which each extend from one respective trough 23 of the at least two troughs 23 to one of the respective two axially closest crests 22, Each curve part comprises a convexly curved outer portion 26, which extends radially inward from the crest, and has a radius 27 of curvature that, in all positions, is larger than 0,1 mm.

A period length 32 of the imaginary straight line extends from a first to a second of the respective two axially closest crests, and wherein, for each cutting edge 12 comprising one of the front cutting edges 13 and one of the rear cutting edges 29, the period length 32 is equal the period arc length 28.

The peaks 22 of cutting edge 12 each has larger curvature than the peaks of the cutting edge 12 of the first embodiment. As can be seen in Fig. 10, thereby a more wave-shaped line 19 of intersection is obtained, which is representative of a roughing tool with less good surface finish.

## Claims

1. An end mill for metal cutting comprising a body (1), which body (1) comprises
- a front end (2), a rear end (3), and a central longitudinal axis (4) extending from the front end to the rear end, wherein the body (1) is configured rotatable in a direction of rotation (5) around the central longitudinal axis (4), and
- a cutting section (6) extending axially rearward from the front end (2), which cutting section (6) comprises a plurality of radially protruding and axially extending teeth (7),
wherein
- each tooth of the plurality of teeth comprises a rake surface (11), a clearance surface (10), and a cutting edge (12) at an intersection of the rake surface (11) with the clearance surface (10),
- each cutting edge of the plurality teeth comprise a front cutting edge (13), which front cutting edge (13) extends axially rearward and radially outward from an axially most forward point (14, 14a) of the respective cutting edge (12), and,
- when the body (1) is rotated, the cutting edge (12) of each tooth (7) forms a line of intersection in a central plane containing the central longitudinal axis (4),
**characterized in that**
each front cutting edge (13) is interrupted by at least two chip splitting grooves (17) such that the line of intersection of the front cutting edge (13) with the interrupting chip splitting grooves (17) comprises
- at least three outer crests (22), which each is located on an imaginary curve (24), wherein the imaginary curve (24) extends in the central plane and is convex,
- at least two inner troughs (23), which each is located between respective two axially closest crests (22) of the at least three crests (22), and
- curve parts (25), which each extend from one respective trough (23) of the at least two troughs (23) to one of the respective two axially closest crests (22),
wherein each curve part (25) comprises a convexly curved outer portion (26), which
- extends inward from the crest (22), and
- has a radius (27) of curvature that, in all positions, is larger than 0,1 mm.

2. The end mill as claimed in claim 1, wherein the radius of curvature of the convexly curved outer portion has a minimum, wherein the radius of curvature at the minimum is that is smaller than 0,3 mm.

3. The end mill as claimed in any preceding claim, wherein,
- the clearance surface (10) of each tooth has a first clearance angle ε closest to the cutting edge (12), and wherein,
- in any axial position along the axial extension of each of the front cutting edges (13), all clearance surfaces (10) have the same first clearance angle ε.

4. The end mill as claimed in claim 3, wherein
- the clearance surface (10) of each tooth (7) comprises a reinforcement bevel closest to the cutting edge (12),
- in the any axial position along the axial extension of each of the front cutting edges (13), the first clearance angle (10) is a clearance angle of a reinforcement bevel, wherein the first clearance angle is at least 0,5° and at most 5°.

5. The end mill as claimed in claim 3 or 4, wherein, from an axially most forward point (14, 14a) of each of the front cutting edges (13) and axially rearward along the axial extension thereof, the first clearance angle ε is constant, increases continuously or decreases continuously.

6. The end mill as claimed in any preceding claim, wherein the end mill is configured for a maximal feed per tooth (7), wherein, for each of the front cutting edges (13), the inward extension of each curve part (25) is at least the maximal feed per tooth (7).

7. The end mill as claimed in claim 6, wherein an inward extension of each curve part (25) is at most 20% of a period arc length (28) of the imaginary curve (24), wherein the period arc length (28) extends from a first to a second of the respective two axially closest crests (22).

8. The end mill as claimed in any preceding claim, wherein a first of the front cutting edges (13) has an axially forwardly cutting front portion (16), and at least a second of front cutting edges (13) has the forward most point (14a) axially rearward of a non-cutting recess (15), wherein the front portion (16)
- extends from the axially most forward point (14) at the central longitudinal axis (4) and axially rearward at least an axial distance corresponding to the axial length of the non-cutting recess (15), and
- lacks all the at least two chip splitting grooves (17).

9. The end mill as claimed in any preceding claim, wherein the imaginary curve (28) is a circle arc and has a radius of curvature of 2 - 12,5 mm.

10. The end mill as claimed in any preceding claim, wherein the body (1) comprises a ball nose front end and wherein each of the front cutting edges (13) is located on the ball nose front end.

11. The end mill as claimed in any preceding claim, wherein each front cutting edge (13) has 3 - 6 chip splitting grooves (17).

12. The end mill as claimed in any preceding claim, wherein at least one of the cutting edges (12) comprises a rear cutting edge (29) extending axially rearward from an axially rear end of the front cutting edge (13), wherein at least radially outer portions (22) of the line (19) of intersection of the at least one rear cutting edge (29) are located on an imaginary straight line (31).

13. The end mill as claimed in claim 12, wherein each rear cutting edge (29) is interrupted by at least two chip splitting grooves (17) such that the line (19) of intersection of the rear cutting edge (29) comprises
- at least three radially outer crests (22), which each is located on the imaginary straight line,
- at least two radially inner troughs (23), which each is located between respective two axially closest crests (22) of the at least three crests (22), and
- curve parts (25), which each extend from one respective trough (23) of the at least two troughs (23) to one of the respective two axially closest crests (22),
wherein each curve part (25) comprises a convexly curved outer portion (26), which
- extends radially inward from the crest (22), and
- has a radius (27) of curvature that, in all positions, is larger than 0,1 mm.

14. The end mill as claimed in claim 7 and 13, wherein a period length (32) of the imaginary straight line (31) extends from a first to a second of the respective two axially closest crests (22), and wherein, for each cutting edge (12) comprising one of the front cutting edges(13) and one of the rear cutting edges (29), the period length (32) is equal the period arc length (28).

15. The end mill as claimed in any preceding claim, wherein at least two of the front cutting edges (13) have their respective chip splitting grooves (17) in different axial positions.
